# EUROPEAN PATENT APPLICATION

(11) **EP 1 197 903 A2**
(43) Date of publication of application: **17.04.2002**
(21) Application number: 01308244.1
(22) Date of filing: 27.09.2001
(51) Int. Cl.: G06F 17/60

(54) **Multimedia on-demand system, information transmission method and storage medium**

(30) Priority: 29.09.2000 JP 2000298864; 02.08.2001 JP 2001234932
(71) Applicant: CANON KABUSHIKI KAISHA, Tokyo (JP)
(72) Inventor: Yamamoto, Mitsuru, c/o Canon Kabushiki Kaisha, Tokyo (JP)
(74) Representative: Beresford, Keith Denis Lewis

(57) **Abstract**

This invention has as its object to achieve a simple arrangement and cost reduction of each terminal, and allow processing of high-resolution video information. A system includes a narrow-band communication path (20) for transmitting control information, a broad-band communication path (30) for transmitting video information, a plurality of control terminals (40-1 - 40-n) connected to the narrow-band communication path (20), a plurality of display terminals (50-1 - 50-n) connected to the broad-band communication path (30), and a server (1) connected to the narrow-band communication path (20) and broad-band communication path (30). Video information is transmitted from the server (1) to one of the display terminals, and control information is transmitted from one of the control terminals to the server (1) to control transmission of video information from the server (1).

## Description

### FIELD OF THE INVENTION

The present invention relates to a multimedia on-demand system and information transmission method and, more particularly, to a multimedia on-demand system in which a server holds a plurality of pieces of multimedia information, and provides desired multimedia information among them, an information transmission method applied to the multimedia on-demand system, and a storage medium that stores a program for implementing the information transmission method.

### BACKGROUND OF THE INVENTION

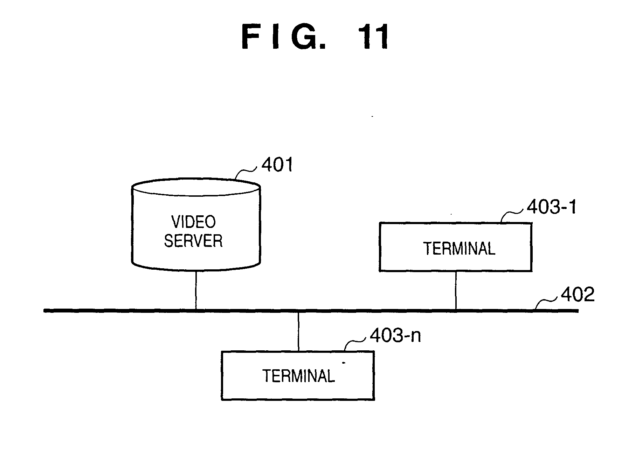

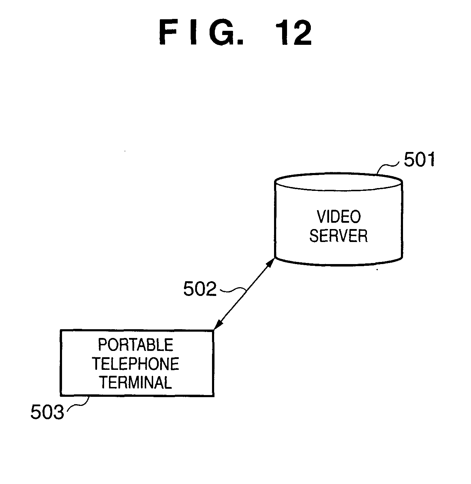

Conventionally, various multimedia on-demand systems which read out and play back video information recorded in a server have been developed. Such system will be explained below with reference to Figs. 11 and 12.

Fig. 11 is a block diagram showing the arrangement of a conventional video on-demand system.

Referring to Fig. 11, reference numeral 401 denotes a video server which stores video data compressed by, e.g., MPEG2. The video server 401 is connected to a plurality of terminals 403-1 to 403-n via a multimedia network 402, and sends stored video information to one of the terminals 403-1 to 403-n via the multimedia network 402 in accordance with control information sent from that terminal.

The multimedia network 402 transmits control data, and transmits a plurality of multimedia data such as video data, audio data, and the like.

The plurality of terminals 403-1 to 403-n have a function of transmitting control data used to designate and read out a desired video data from a plurality of video data stored in the video server 401, and a function of playing back and displaying video data read out and transmitted from the video server 401.

Fig. 12 is a block diagram showing the arrangement of a conventional video on-demand system which combines a portable terminal and the Internet.

Referring to Fig. 12, reference numeral 501 denotes a video server which stores video data compressed by a high-compression scheme such as MPEG4 or the like. Reference numeral 502 denotes the Internet; and 503, a portable telephone terminal which can establish connection to the Internet 502.

In this conventional system, the user accesses the video server 501 via the Internet 502 using the portable telephone terminal 503, designates desired video information, and receives delivery of the designated video information from the video server 501.

However, in the conventional video on-demand system shown in Fig. 11, control data is transmitted by a protocol such as TCP/IP or the like. On the other hand, video and audio data are transmitted by a protocol dedicated to-a real-time system other than TCP/IP. Hence, the terminals 403-1 to 403-n must be compatible to both the protocols, and their internal arrangement becomes complicated and expensive.

Also, the multimedia network 402 must be compatible to both the control data of a non-real-time system, and video and audio data of a real-time system, resulting in a complicated, expensive network.

Furthermore, in the conventional video on-demand system shown in Fig. 12, the transmission rate is low (around several ten kbps) since the Internet is used, and the portable telephone terminal 503 can only display video information which is highly compressed by, e.g., MPEG4, since it has a small display screen.

### SUMMARY OF THE INVENTION

It is a concern of the present invention to provide a multimedia on-demand system, information transmission method, and storage medium, which can achieve a simple arrangement and a cost reduction of each terminal, and can easily handle high-resolution video information.

It is another concern of the present invention to provide a video server, terminal, display device, designation confirmation method, and storage medium, which can display video data only on a display terminal correctly designated by the user.

In one aspect of the present invention provides communication system comprising a plurality of first terminals connected to a first transmission path for transmitting first information; a plurality of second terminals connected to a second transmission path for transmitting second information different from the first information; and a server connected to the first and second transmission paths, wherein the second information is transmitted from the server to one of the plurality of second terminals, and the first information is transmitted from one of the plurality of first terminals to the server to control transmission of the second information from the server.

An embodiment of the present invention provides the system wherein the first information contains first designation information for designating one of a plurality of pieces of information held in the server, and second designation information for designating one of the plurality of second terminals, and the second information is information which is read out from the server on the basis of the first designation information, and is transmitted from the server to the second terminal designated by the second designation information.

Another aspect of the present invention to an information transmission method applied to a communication system which comprises a plurality of first terminals connected to a first transmission path for transmitting first information, a plurality of second terminals connected to a second transmission path for transmitting second information different from the first information, and a server connected to the first and second transmission paths, comprising the first transmission step of transmitting the first information from one of the plurality of first terminals to the server; and the second transmission step of transmitting the second information from the server to one of the plurality of second terminals on the basis of the first information transmitted in the first transmission step.

Preferably the first information contains first designation information for designating one of a plurality of pieces of information held in the server, and second designation information for designating one of the plurality of second terminals, and the second information is information which is read out from the server on the basis of the first designation information, and is transmitted from the server to the second terminal designated by the second designation information.

A further aspect of the present invention provides a computer readable storage medium, which stores as a program an information-transmission method applied to a communication system which comprises a plurality of first terminals connected to a first transmission path for transmitting first information, a plurality of second terminals connected to a second transmission path for transmitting second information different from the first information, and a server connected to the first and second transmission paths, the information transmission method comprising the first transmission step of transmitting the first information from one of the plurality of first terminals to the server; and the second transmission step of transmitting the second information from the server to one of the plurality of second terminals on the basis of the first information transmitted in the first transmission step.

Yet another aspect of the present invention provides a video server which is connected to a plurality of first terminals via a first transmission path, and to a plurality of second terminals via a second transmission path, comprising display request reception means for receiving a video information display request which is transmitted from one of the plurality of first terminals, and consists of video designation information for designating video information to be displayed, and display device designation information for designating the second terminal which is to display the video information; confirmation information transmission means for transmitting first confirmation information, which is generated based on the video information display request, to the second terminal designated by the display device designation information of the video information display request; request confirmation information reception means for receiving request confirmation information which is transmitted from one of the plurality of first terminals, and consists of second confirmation information; first comparison means for comparing identification information of the first terminal which transmitted the request confirmation information, and identification information of the first terminal which transmitted the video information display request; second comparison means for comparing the second confirmation information contained in the request confirmation information received by the request confirmation information reception means, and the first confirmation information transmitted by the confirmation information transmission means; and video information transmission means for transmitting video information designated by the video designation information of the video information display request to the second terminal designated by the display device designation information in accordance with comparison results of the first and second comparison means.

It is another object of the present invention to provide a terminal connected to a video server which transmits, upon receiving a video information display request containing video designation information for designating video information to be displayed, and display device designation information for designating a display device which is to display the video information, first confirmation information generated based on the video information display request to the display device designated by the display device designation information of the video information display request before the video information designated by the video designation information of the video information display request is transmitted to the display device designated by the display device designation information, comprising: generation means for, when a user, who can recognize the first confirmation information as a result of transmitting the first confirmation information to the display device designated by the display device designation information of the video information request, inputs second confirmation information which is the same as the first confirmation information, generating request confirmation information on the basis of the second confirmation information; and transmission means for transmitting the request confirmation information generated by the generation means to the video server.

It is another object of the present invention to provide a display device connected to a video server which transmits, upon receiving a video information display request containing video designation information for designating video information to be displayed, and display device designation information for designating a display device which is to display the video information, first confirmation information generated based on the video information display request to the display device designated by the display device designation information of the video information display request, and transmits, when second confirmation information received later is the same as the first confirmation information and a terminal which transmitted the video information display request is the same as a terminal which transmitted the second confirmation information, video information designated by the video designation information of the video information display request to the display device designated by the display device designation information, comprising: first display means for displaying the video information; and second display means for displaying the first confirmation information.

It is another object of the present invention to provide a designation confirmation method applied to a video server which is connected to a plurality of first terminals via a first transmission path, and to a plurality of second terminals via a second transmission path, comprising the display request reception step of receiving a video information display request which is transmitted from one of the plurality of first terminals, and consists of video designation information for designating video information to be displayed, and display device designation information for designating the second terminal which is to display the video information; the confirmation information transmission step of transmitting first confirmation information, which is generated based on the video information display request, to the second terminal designated by the display device designation information of the video information display request; the request confirmation information reception step of receiving request confirmation information which is transmitted from one of the plurality of first terminals, and consists of second confirmation information; the first comparison step of comparing identification information of the first terminal which transmitted the request confirmation information, and identification information of the first terminal which transmitted the video information display request; the second comparison step of comparing the second confirmation information contained in the request confirmation information received in the request confirmation information reception step, and the first confirmation information transmitted in the confirmation information transmission step; and the video information transmission step of transmitting video information designated by the video designation information of the video information display request to the second terminal designated by the display device designation information in accordance with comparison results in the first and second comparison steps.

It is another object of the present invention to provide a computer readable storage medium that stores as a program a designation confirmation method applied to a video server which is connected to a plurality of first terminals via a first transmission path, and to a plurality of second terminals via a second transmission path, the designation confirmation method comprising the display request reception step of receiving a video information display request which is transmitted from one of the plurality of first terminals, and consists of video designation information for designating video information to be displayed, and display device designation information for designating the second terminal which is to display the video information; the confirmation information transmission step of transmitting first confirmation information, which is generated based on the video information display request, to the second terminal designated by the display device designation information of the video information display request; the request confirmation information reception step of receiving request confirmation information which is transmitted from one of the plurality of first terminals, and consists of second confirmation information; the first comparison step of comparing identification information of the first terminal which transmitted the request confirmation information, and identification information of the first terminal which transmitted the video information display request; the second comparison step of comparing the second confirmation information contained in the request confirmation information received in the request confirmation information reception step, and the first confirmation information transmitted in the confirmation information transmission step; and the video information transmission step of transmitting video information designated by the video designation information of the video information display request to the second terminal designated by the display device designation information in accordance with comparison results in the first and second comparison steps.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the descriptions, serve to explain the principle of the invention.
Fig. 1 is a block diagram showing the arrangement of a multimedia on-demand system according to the first embodiment of the present invention;
Fig. 2 is a block diagram showing the internal arrangement of a server according to the first embodiment of the present invention;
Fig. 3 is a block diagram showing the internal arrangement of a control terminal according to the first embodiment of the present invention;
Fig. 4 is a block diagram showing the internal arrangement of a display terminal according to the first embodiment of the present invention;
Fig. 5 is a block diagram showing the arrangement of a multimedia on-demand system according to the second embodiment of the present invention;
Fig. 6 is a block diagram showing the arrangement of a multimedia on-demand system according to the third embodiment of the present invention;
Fig. 7 is a block diagram showing the arrangement of a multimedia on-demand system according to the fourth embodiment of the present invention;
Fig. 8 is a flow chart showing the sequence of processes executed by a server according to the fourth embodiment of the present invention;
Fig. 9 is a block diagram showing the arrangement of a multimedia on-demand system according to the fifth embodiment of the present invention;
Fig. 10 is a block diagram showing the arrangement of a confirmation information processor of a server according to the sixth embodiment of the present invention;
Fig. 11 is a block diagram showing the arrangement of a conventional video on-demand system; and
Fig. 12 is a block diagram showing the arrangement of a conventional video on-demand system that combines a portable telephone terminal and the Internet.

### DESCRIPTION OF THE PREFERRED EMBODIMENTS

Preferred embodiments of the present invention will be described hereinafter with reference to the accompanying drawings.

### (First Embodiment)

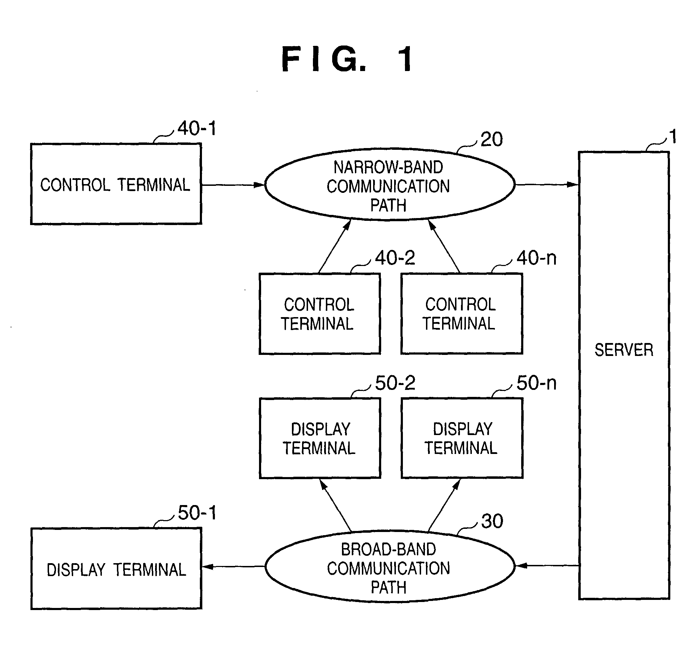

Fig. 1 is a block diagram showing the arrangement of a multimedia on-demand system according to the first embodiment of the present invention.

Referring to Fig. 1, reference numeral 1 denotes a server which stores various kinds of video information, and has a function of reading out desired video information in accordance with control information sent from a control terminal (to be described later), and transmitting the readout information to a display terminal (to be described later) .

Reference numeral 20 denotes a narrow-band communication path, which is located between a plurality of control terminals 40-1 to 40-n, and the server 1, and serves as a communication path for transmitting control information from each control terminal to the server 1. As the narrow-band communication path 20, a wireless or wired telephone network can be used.

Reference numeral 30 denotes a broad-band communication path which serves as a communication path for transmitting video information read out from the server 1 to a display terminal (to be described later). As the broad-band communication path 30, a broad-band wired network such as ATM or the like can be used. To the broad-band communication path 30, a plurality of display terminals 50-1 to 50-n are connected, PVC (Permanent Virtual Connection) values are respectively set between the server 1 and display terminals 50-1 to 50-n, and routing from the server 1 to each of the display terminals 50-1 to 50-n is done in accordance with address information corresponding to the PVC values.

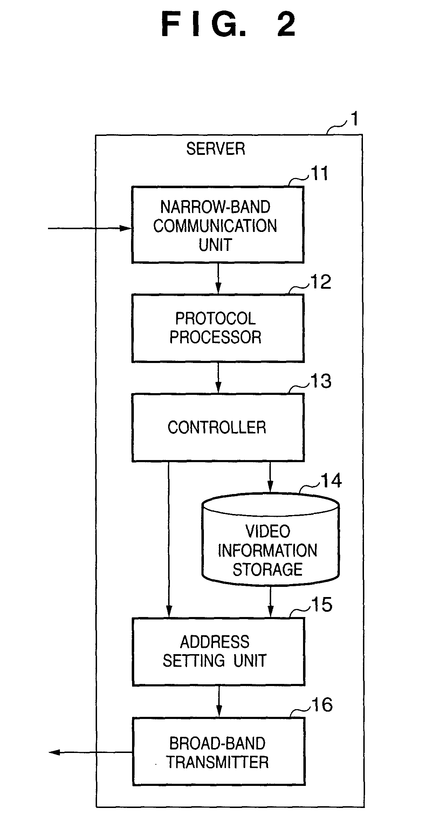

Fig. 2 is a block diagram showing the internal arrangement of the server 1.

The server 1 comprises a narrow-band communication unit 11, protocol processor 12, controller 13, video information storage 14, address setting unit 15, and broad-band transmitter 16.

The narrow-band communication unit 11 is connected to narrow-band communication units (to be described later) of the control terminals 40-1 to 40-n via the narrow-band communication path 20, and executes communications with the control terminals 40-1 to 40-n.

The protocol processor 12 executes processes of a protocol in communications of control information made between the narrow-band communication unit 11 and those of the control terminals 40-1 to 40-n.

The controller 13 controls, e.g., a read process of video data from the video information storage 14 in accordance with control information sent from the protocol processor 12.

The video information storage 14 saves video information compressed based on compression standards such as MPEG2 or the like, and desired video information is read out from the storage 14 under the control of the controller 13.

The address setting unit 15 sets a destination address to be appended to video information read out from the video information storage 14 in accordance with an instruction from the controller 13.

The broad-band transmitter 16 transmits video information read out from the video information storage 14 via the broad-band communication path 30.

Upon receiving control information from one of the control terminals 40-1 to 40-n via the narrow-band communication path 20, the server 1 with the above arrangement reads out video information designated by the control information from various kinds of video information stored in the video information storage 14, appends predetermined address information to the readout information, and transmits the video information from the broad-band transmitter 16 to the display terminal corresponding to the predetermined address information via the broad-band communication path 30.

The broad-band communication path 30 transmits the video information read out from the video information storage 14 of the server 1 to a corresponding display terminal in accordance with the address information appended by the address setting unit 15.

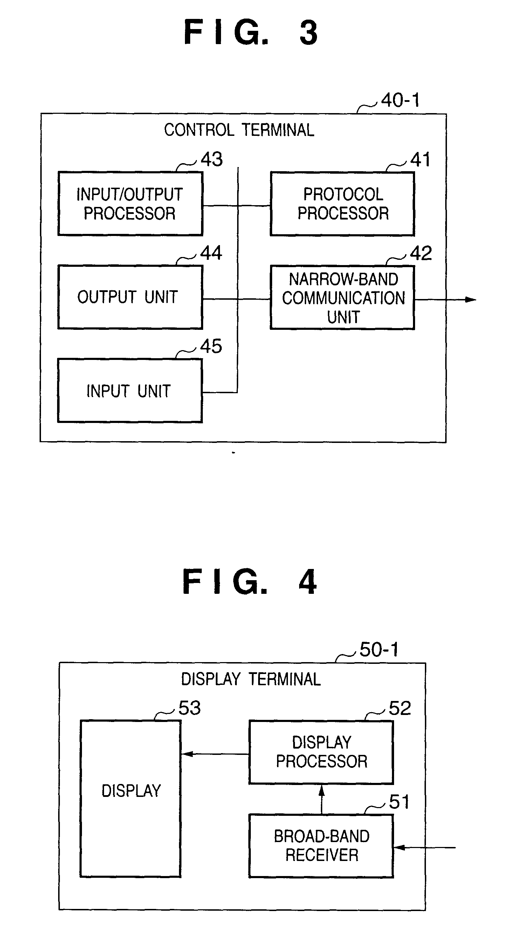

Fig. 3 is a block diagram showing the internal arrangement of the control terminal 40-1. Since the control terminals 40-1 to 40-n have the same arrangement, the internal arrangement of only the control terminal 40-1 will be explained.

The control terminal 40-1 comprises a protocol processor 41, narrow-band communication unit 42, input/output processor 43, output unit 44, and input unit 45.

The protocol processor 41 processes a protocol in communications of control information made between the narrow-band communication unit 42 and the narrow-band communication unit 11 of the server 1.

The narrow-band communication unit 42 is connected to the narrow-band communication unit 11 of the server 1 via the narrow-band communication path 20, and communicates with the narrow-band communication unit 11.

The input/output processor 43 has an input/output processing function of controlling the output unit 44 and input unit 45, and also a function of outputting information input to the input unit 45 by the user to the protocol processor 41 as control information.

The output unit 44 has a function of displaying information output from the input/output processor 43 to the user. That is, the output unit 44 makes display for prompting the user of the control terminal 40-1 to make operations such as designation of video information to be read out from the video information storage 14 of the server 1.

The input unit 45 is an input device used when the user designates video information to be read out from the video information storage 14 of the server 1.

With this arrangement, the control terminal 40-1 transmits control information for reading out desired video information of those stored in the video information storage 14 of the server 1 to the server 1 via the narrow-band communication path 20.

As the control terminal 40-1, a portable telephone or PHS telephone compatible to a wireless telephone network, a telephone compatible to a wired telephone network, and the like can be used.

Fig. 4 is a block diagram showing the internal arrangement of the display terminal 50-1. Since the display terminals 50-1 to 50-n have the same arrangement, the internal arrangement of only the display terminal 50-1 will be explained.

The display terminal 50-1 comprises a broad-band receiver 51, display processor 52, and display 53.

The broad-band receiver 51 receives video information transmitted from the broad-band transmitter 16 of the server 1 via the broad-band communication path 30.

The display processor 52 decodes video information received by the broad-band receiver 51 in a predetermined sequence according to the display function of the display 53, and outputs the decoded information to the display 53.

The display 53 displays the video information output from the display processor 52 on a screen.

With this arrangement, the display terminal 50-1 displays video information transmitted via the broad-band communication path 30 on the display 53. Note that the display terminal 50-1 need not have any communication function with the server 1.

The operation of the multimedia on-demand system will be explained below with reference to Figs. 1 to 4.

Initially, the user of, e.g., the control terminal 40-1 inputs a control signal for a channel establish instruction to the server 1 from the input unit 45. This channel establish control signal is output to the protocol processor 41 via the input/output processor 43, and a series of control information are sent from the narrow-band communication unit 42 to the narrow-band communication unit 11 of the server 1 in accordance with a predetermined protocol and are processed by the protocol processor 12, thus establishing a channel.

Subsequently, the user of the control terminal 40-1 inputs from the input unit 45 video designation information as control information for designating desired video information from various kinds of video information stored in the server 1, and address information of a display terminal as control information for designating a display terminal (e.g., display terminal 50-1) that displays the designated video information.

The input video designation information and address information are transmitted by a predetermined protocol between the protocol processor 41 of the control terminal 40-1 and the protocol processor 12 of the server 1, and are sent to the controller 13 of the server 1.

The controller 13 sets the received address information in the address setting unit 15. At the same time, the controller 13 reads out the designated video information from the video information storage 14 on the basis of the video designation information, and outputs the readout information to the broad-band transmitter 16. The broad-band transmitter 16 appends the address information output from the address setting unit 15 to the readout video information, and outputs the video information onto the broad-band communication path 30. The broad-band communication path 30 computes a PVC value in accordance with the address information appended to the video information, and executes routing according to the PVC value to transmit the video information to the broad-band receiver 51 of the designated display terminal 50-1.

The video information input to the broad-band receiver 51 is output to the display processor 52, is decoded by the display processor 52, and is displayed on the display 53.

In this manner, in the first embodiment, the narrow-band communication path 20 and broad-band communication path 30 are used together. The server 1 reads out desired video information from various kinds of video information stored in the video information storage 14 in accordance with control information sent from, e.g., the control terminal 40-1 via the narrow-band communication path 20, appends predetermined address information to the video information, and transmits the readout video signal from the broad-band transmitter 16 to the broad-band receiver 51 of, e.g., the display terminal 50-1 corresponding to the predetermined address information via the broad-band communication path 30. The display terminal 50-1 displays received video information on the display 53.

In this manner, control information is sent from each of the control terminals 40-1 to 40-n which comprise, e.g., portable telephones and the like to the server 1 via the narrow-band communication path 20, while video information is sent from the server 1 to the display terminals 50-1 to 50-n via the broad-band communication path 30. For this reason, the display terminals 50-1 to 50-n and server 1 need not be added with a communication function for transmitting control information via the broad-band communication path 30, thus simplifying the apparatus arrangement.

Furthermore, in the multimedia on-demand system in the first embodiment, existing video distribution networks of an amusement park, various stadiums, and the like can be used as the broad-band communication path 30, the display terminals 50-1 to 50-n are connected to the video distribution network, and users use their portable telephones as the control terminals 40-1 to 40-n. In this case, each user can download and display desired video data on a desired display terminal by operating his or her portable telephone without operating the display terminals 50-1 to 50-n. For this reason, the user need not operate an unfamiliar display terminal, thus improving operability. Furthermore, for a video service provider, since users do not directly operate display terminals, failures due to operation errors of the display terminals can be prevented.

### (Second Embodiment)

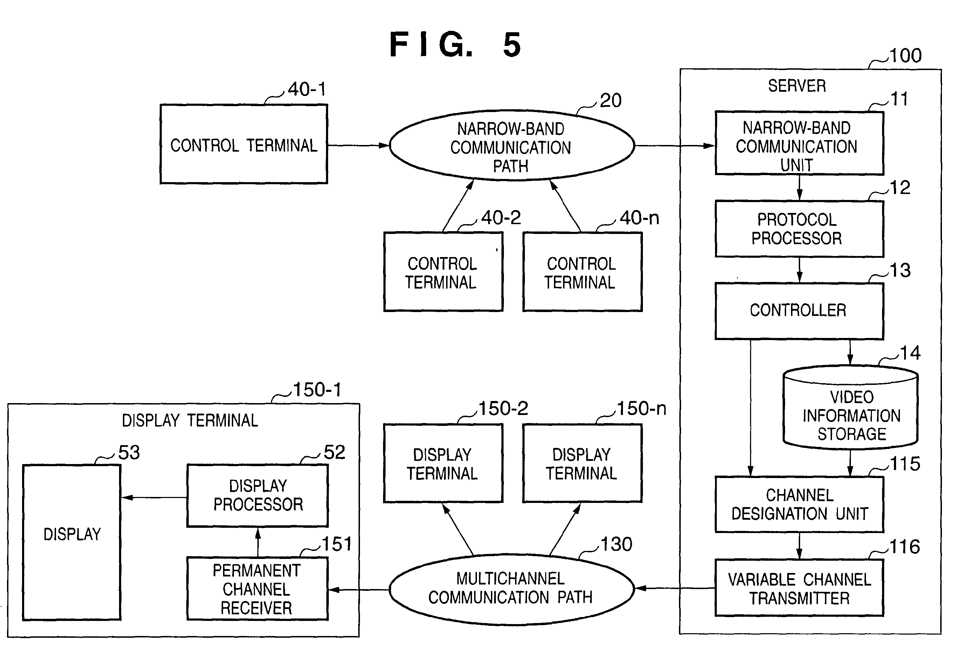

Fig. 5 is a block diagram showing the arrangement of a multimedia on-demand system according to the second embodiment of the present invention. Since the arrangement of the second embodiment is basically the same as that of the first embodiment, the same reference numerals denote the same parts, and a detailed description thereof will be omitted.

Referring to Fig. 5, reference numeral 100 denotes a server of the second embodiment, which comprises a narrow-band communication unit 11, protocol processor 12, controller 13, video information storage 14, channel designation unit 115, and variable channel transmitter 116.

The channel designation unit 115 sets a channel to be used upon transmitting video information read out from the video information storage 14 in accordance with an instruction from the controller 13.

The variable channel transmitter 116 transmits video information read out from the video information storage 14 to a permanent channel receiver 151 of, e.g., a display terminal 150-1 via the designated channel of a multichannel communication path 130 (to be described later).

With the above arrangement, the server 100 receives control information from, e.g., a control terminal 40-1 via a narrow-band communication path 20, reads out video information designated by the control information from various kinds of video information stored in the video information storage 14, and transmits the readout video information from the variable channel transmitter 116 to the permanent channel receiver 151 of, e.g., the display terminal 150-1 via a predetermined channel of the multichannel communication path 130.

Reference numeral 130 denotes a multichannel communication path having a plurality of transmission channels. The multichannel communication path 130 has a function of a communication path for transmitting video information read out from the video information storage 14 of the server 100 to the permanent channel receiver 151 of, e.g., the display terminal 150-1 via a channel designated by the channel designation unit 115. As the multichannel communication path 130, a frequency multiplex transmission path of electrical signals, a wavelength multiplex transmission path of optical signals, a time-division multiplex transmission path, a code level multiplex transmission path, and the like can be used.

A plurality of display terminals 150-1 to 150-n are connected to the multichannel communication path 130. Since different channels are set in permanent channel receivers of these display terminals, the display terminals can receive video signals sent from the server 100 without interfering with each other. Video information is transmitted to each display terminal using reception channel information as address information.

Since the plurality of display terminals 150-1 to 150-n have the same arrangement, the arrangement of only the display terminal 150-1 will be explained.

The display terminal 150-1 comprises a permanent channel receiver 151, display processor 52, and display 53. The permanent channel receiver 151 has a function of receiving video information transmitted from the variable channel transmitter 116 of the server 100 via the multichannel communication path 130.

With the above arrangement, the display terminal 150-1 displays video information sent via the multichannel communication path 130 on the display 53.

Note that the display terminals 150-1 to 150-n do not require any communication function with the server 100.

The operation of the multimedia on-demand system in the second embodiment will be explained below with reference to Fig. 5.

Initially, the user of, e.g., the control terminal 40-1 inputs a control signal for a channel establish instruction to the server 100 from an input unit 45. This channel establish control signal is output to a protocol processor 41 via an input/output processor 43, and a series of control information are sent from a narrow-band communication unit 42 to the narrow-band communication unit 11 of the server 100 in accordance with a predetermined protocol and are processed by the protocol processor 12, thus establishing a channel.

Subsequently, the user of the control terminal 40-1 inputs video designation information as control information for designating desired video information from various kinds of video information stored in the server 100, and address information of a display terminal as control information for designating a display terminal (e.g., display terminal 150-1) that displays the designated video information.

The input video designation information and address information are transmitted by a predetermined protocol between the protocol processor 41 of the control terminal 40-1 and the protocol processor 12 of the server 100, and are sent to the controller 13 of the server 100.

The controller 13 outputs the received address information to the channel designation unit 115. At the same time, the controller 13 reads out the designated video information from the video information storage 14 on the basis of the video designation information, and outputs the readout information to the variable channel transmitter 116. The variable channel transmitter 116 sets a transmission channel based on the channel designated by the channel designation unit 115, and outputs the readout video information onto the multichannel communication path 130 via the set transmission channel.

The multichannel communication path 130 transmits the video information using the designated channel to the permanent channel receiver 151 of, e.g., the designated display terminal 150-1.

The video information input to the permanent channel receiver 151 is output to the display processor 52, undergoes a predetermined process by the display processor 52, and is then displayed on the display 53.

As described above, in the second embodiment, the multichannel communication path 130 is used as a broad-band communication path, and the variable channel transmitter 116 of the server 100 specifies a display terminal. Therefore, in the multimedia on-demand system of this embodiment, a CATV communication network can be used as the multimedia communication path 130, conventional CATV terminals can be used as the display terminals 150-1 to 150-n, and users' telephones and the like can be used as the control terminals 40-1 to 40-n.

In such arrangement, since the multichannel communication path 130 can be a one-way communication path from the server 100 to the display terminals 150-1 to 150-n, a CATV service provider can provide services without adding any new control information communication function to the existing CATV network.

Note that a satellite broadcast network, CS broadcast network, and the like may be used as the multichannel communication path in place of the CATV communication network.

### (Third Embodiment)

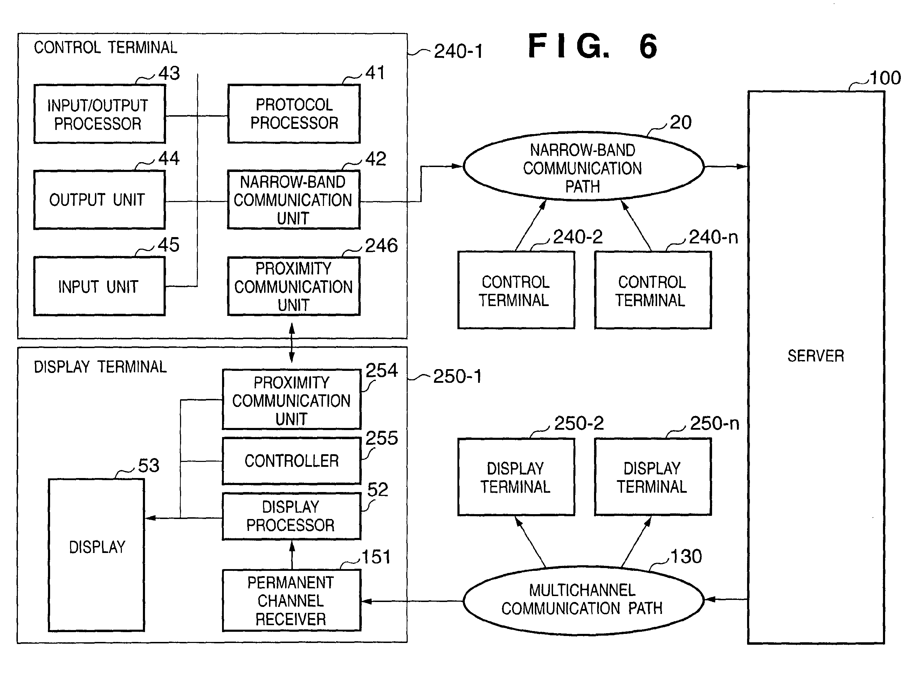

Fig. 6 is a block diagram showing the arrangement of a multimedia on-demand system according to the third embodiment of the present invention. Since the arrangement of the third embodiment is basically the same as that of the second embodiment, the same reference numerals denote the same parts, and a detailed description thereof will be omitted.

In the third embodiment, a plurality of control terminals 240-1 to 240-n are connected to a narrow-band communication path 20. Since the control terminals 240-1 to 240-n have the same arrangement, the arrangement of only the control terminal 240-1 will be described below.

The control terminal 240-1 comprises a protocol processor 41, narrow-band communication unit 42, input/output processor 43, output unit 44, input unit 45, and proximity communication unit 246.

The proximity communication unit 246 has a communication function with a proximity communication unit 254 of a display terminal 250-1 (to be described later).

The control terminal 240-1 transmits control information used to read out desired video information from various kinds of video information stored in a video information storage 14 of a server 100 to the server 100 via the narrow-band communication path 20. Furthermore, the control terminal 240-1 communicates with the display terminal 250-1 using the proximity communication unit 246.

In the third embodiment, a plurality of display terminals 250-1 to 250-n are connected to the multichannel communication path 130. Since the display terminals 250-1 to 250-n have the same arrangement, the arrangement of only the display terminal 250-1 will be explained below.

The display terminal 250-1 comprises a permanent channel receiver 151, display processor 52, display 53, proximity communication unit 254, and controller 255.

The proximity communication unit 254 has a communication function with the proximity communication unit of the control terminal 240-1.

The controller 255 controls the display terminal 250-1 in accordance with information exchanged between the proximity communication unit 254 of the display terminal 250-1 and the proximity communication unit 246 of the control terminal 240-1.

The display terminal 250-1 displays video information transmitted via the multichannel communication path 130 on the display 53. Also, the controller 255 executes the following control processes in accordance with control information sent from the control terminal 240-1.

A series of operations of the multimedia on-demand system of the third embodiment will be explained below with reference to Fig. 6 while being classified into the following three items.
1) For example, the proximity communication unit 246 of the control terminal 240-1 transmits initial setup control information to, e.g., the display terminal 250-1, and initial setups of the display terminal 250-1 are done based on this control information. The display terminal 250-1 informs the control terminal 240-1 of this initial setup result.
2) The control terminal 240-1 transmits control information to the server 100 via the narrow-band communication path 20. The server 100 reads out desired video information from various kinds of video information stored in the video information storage 14, appends predetermined address information to that video information, and outputs the video information from the variable channel transmitter 116 onto a multichannel communication path 130. The video information is sent to a permanent channel receiver 151 of, e.g., the display terminal 250-1 via a channel of the multichannel communication path 130, which is designated by the predetermined address information. The display terminal 250-1 displays the received video information on the display 53. The operation of the second item is the same as the second embodiment.
   As in the first embodiment, the server may comprise an address setting unit 15 and broad-band transmitter 16, the display terminal may comprise a broad-band receiver 51, and the broad-band communication path 130 may be used so as to transmit video information from the broad-band transmitter 16 to the broad-band receiver 51 via the broad-band communication path 130.
3) When video information transmitted from the server 100 begins to be displayed on the display 53 of the display terminal 250-1, the display terminal 250-1 informs the control terminal 240-1 of this. Upon receiving this message, the control terminal 240-1 disconnects the channel with the server 100.

The operation in item 1 will be explained in detail below.

The user of, e.g., the control terminal 240-1 inputs a control signal for a video display start preparation instruction to, e.g., the display terminal 250-1 from the input unit 45 before a channel to the server 100 is established.

The video display start preparation instruction signal is output to the protocol processor 41 via the input/output processor 43, and a series of control information are sent from the proximity communication unit 246 of the control terminal 240-1 to the proximity communication unit 254 of the display terminal 250-1 in accordance with a predetermined protocol. The control information sent to the proximity communication unit 254 is output to the controller 255. Upon receiving the control signal, the controller 255 initializes the permanent channel receiver 151, display processor 52, display 53, and the like. The permanent channel receiver 151, display processor 52, display 53, and the like execute initialization, and send normal or abnormal execution results to the controller 255. The controller 255 transmits the normal/abnormal result information from the proximity communication unit 254 of the display terminal 250-1 to the proximity communication unit 246 of the control terminal 240-1.

In the control terminal 240-1, the normal/abnormal result information received by the proximity communication unit 246 is output to the input processor 43 via the protocol processor 41. The input/output processor 43 sends an output message to the output unit 44 in accordance with the normal/abnormal result information, and the output unit 44 displays that message.

If the output message displayed on the output unit 44 indicates a normal result, the user of the control terminal 240-1 starts a process for reading out video information from the server 100. On the other hand, if the output message from the output unit 44 indicates an abnormal result, the user of the control terminal 240-1 aborts start of the process for reading out video information from the server 100, and makes operation for resetting the abnormal state.

In the first and second embodiments, even when abnormality has occurred in the display terminal, video information is transferred from the server, and the user cannot notice that abnormality until the display terminal starts display. However, in the third embodiment, any abnormality of the display terminal can be found before video information is transferred from the server 100.

The operation in item 3 will be explained in detail below.

Video information, which has been transmitted from the server 100 and input to the permanent channel receiver 151, is output to the display processor 52, which starts a decoding process. When the decoding process has started, the display processor 52 outputs display start information to the controller 255. At the same time, video information is displayed on the display 53. As a method of detecting start of the decoding process, a code delimiting a video signal is detected to determine start of decoding. In an MPEG2 system stream, a sequence header or picture start code can be used as a code delimiting a video signal.

The controller 255 transmits display start information from the proximity communication unit 254 to the proximity communication unit 246 of the control terminal 240-1. In the control terminal 240-1, the proximity communication unit 246 outputs the received display start information to the input/output processor 43 via the protocol processor 41. The input/output processor 43 sends the display start information as a display start message to the output unit 44, which displays that message.

The user of the control terminal 240-1, who watched the display start message displayed on the output unit 44, disconnects a channel established with the server 100.

As described above, in the third embodiment, since information indicating start of playback of video information is sent from the display terminal to the control terminal, the control terminal can quickly disconnect a channel with the server 100 after the video information begins to be played back.

As another embodiment of the third embodiment, the control terminal 240-1 and display terminal 250-1 may be housed in a single housing, and an internal bus may be used as the proximity communication unit.

### (Fourth Embodiment)

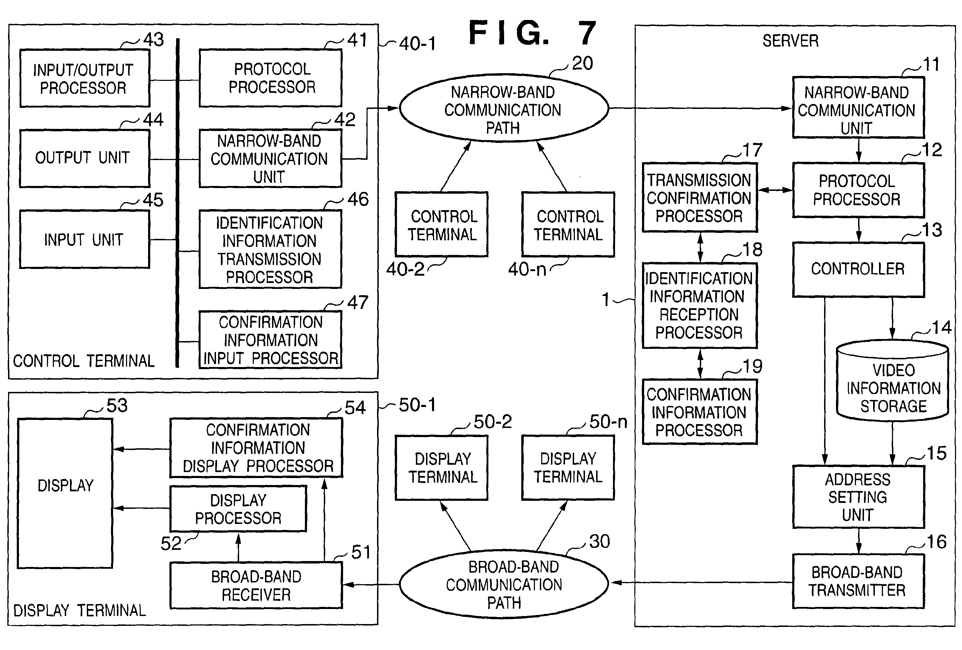

Fig. 7 is a block diagram showing the arrangement of a multimedia on-demand system according to the fourth embodiment of the present invention.

Referring to Fig. 7, reference numeral 1 denotes a server which stores various kinds of video information.

Reference numeral 20 denotes a narrow-band communication path, which is located between a plurality of control terminals 40-1 to 40-n, and the server 1, and comprises a wireless or wired telephone network.

Reference numeral 30 denotes a broad-band communication path, which is located between a plurality of display terminals 50-1 to 50-n and the server 1, and comprises a broad-band wired network such as ATM (Asynchronous Transfer Mode) or the like. In the broad-band communication path 30, PVC (Permanent Virtual Connection) values are respectively set between the server 1 and display terminals 50-1 to 50-n, and routing from the server 1 to each of the display terminals 50-1 to 50-n is done in accordance with address information corresponding to the PVC values.

Since the plurality of control terminals 40-1 to 40-n have the same internal arrangement, their internal arrangement will be explained taking that of the control terminal 40-1 as an example. Likewise, since the plurality of display terminals 50-1 to 50-n have the same internal arrangement, their internal arrangement will be explained taking that of the display terminal 50-1 as an example.

The server 1 comprises a narrow-band communication unit 11, protocol processor 12, controller 13, video information storage 14, address setting unit 15, broad-band transmitter 16, transmission confirmation processor 17, identification information reception processor 18, and confirmation information processor 19.

The narrow-band communication unit 11 has a communication function with narrow-band communication units 42 of the control terminals 40-1 to 40-n via a narrow-band communication path 20. The protocol processor 12 processes a communication protocol upon transmitting a video information display request, request confirmation information, and the like (to be described later) from the narrow-band communication unit 42 to the narrow-band communication unit 11.

The controller 13 executes control upon reading out video information designated by video designation information contained in a video information display request from the video information storage 14 when the narrow-band communication unit 11 receives the video information display request and sends it to the controller 13 via the protocol processor 12. Also, the controller 13 executes control for appending, to the video information, address information of a display terminal to which the video information is to be transmitted to be displayed, and control for appending a destination address to confirmation information (to be described later).

The video information storage 14 saves video information compressed based on compression standards such as MPEG2 or the like, and desired video information is read out from the storage 14 under the control of the controller 13.

The address setting unit 15 has a function of setting a destination address to be appended to video information read out from the video information storage 14 in accordance with an instruction from the controller 13, and a function of setting a destination address to be appended to confirmation information (to be described later) output from the confirmation information processor 19 in accordance with an instruction from the controller 13.

The broad-band transmitter 16 has a function of transmitting video information read out from the video information storage 14, and confirmation information output from the confirmation information processor 19 to broad-band receivers 51 of the display terminals 50-1 to 50-n via the broad-band communication path 30.

As will be described in detail later, the transmission confirmation processor 17 collates identification information and confirmation information upon receiving request confirmation information after a video information display request from each of the control terminals 40-1 to 40-n, thereby confirming if the user of the control terminal has designated a correct display terminal. If it is confirmed that the user has designated a correct display terminal, the processor 17 instructs the controller 13 to transmit video information.

The identification information reception processor 18 extracts identification information indicating a source control terminal from a video information display request or request confirmation information sent from the control terminals 40-1 to 40-n, and outputs the identification information to the transmission confirmation processor 17.

The confirmation information processor 19 extracts address information contained in a video information display request sent from each of the control terminals 40-1 to 40-n, generates confirmation information, and sends it to the address setting unit 15, as will be described in detail later. Upon receiving request confirmation information from each of the control terminals 40-1 to 40-n, the processor 19 extracts contained in that information, and outputs it to the transmission confirmation processor 17.

Note that the video information display request contains designation information of video information that the user of the control terminal who submitted the video information display request wants to display, address information for designating a display terminal which is to display the video information, and identification information of the control terminal that transmitted the video information display request.

The confirmation information is comprised of a location where the display terminal corresponding to address information is equipped, and a reception time of the video information display request, and is expressed by, e.g., "location A, time B".

The request confirmation information is sent to the server 1 when the user of the control terminal who watched the confirmation information displayed on the display terminal inputs that confirmation information to the control terminal. The request confirmation information contains the input confirmation information, and identification of the control terminal.

With the above arrangement, upon receiving a video information display request from each of the control terminals 40-1 to 40-n via the narrow-band communication path 20, the server 1 appends address information contained in the video information display request to confirmation information output from the confirmation information processor 19, and transmits that information from the broad-band transmitter 16 to the broad-band receiver 51 of the display terminal corresponding to the address information via the broad-band communication path 30.

Furthermore, upon receiving request confirmation information from each of the control terminals 40-1 to 40-n via the narrow-band communication path 20, the server 1 confirms if the user of the control terminal has designated a correct display terminal as an output destination of video information. If it is confirmed that the user has designated a correct display terminal, the server 1 instructs the controller 13 to transmit video information. The controller 13 reads out designated video information from various kinds of video information stored in the video information storage 14, appends designated address information to the video information, and transmits the video information from the broad-band transmitter 16 to the broad-band receiver 51 of the display terminal corresponding to the designated address information via the broad-band communication path 30.

The narrow-band communication path 20 has a function as a transmission path for transmitting a video information display request and request confirmation information from the control terminals 40-1 to 40-n to the server 1.

The broad-band communication path 30 has a function as a transmission path for transmitting video information read out from the video information storage 14 of the server 1 to the broad-band receiver 51 of the display terminal corresponding to the address information appended by the address setting unit 15. Also, the path 30 has a function as a transmission path for transmitting confirmation information output from the confirmation information processor 19 to the broad-band receiver 51 of the display terminal corresponding to the address information appended by the address setting unit 15.

When a broad-band wired network such as ATM or the like is used as the broad-band communication path 30, it can serve as both a large-communication capacity communication means for transmitting video information, and a small-communication capacity communication means for transmitting confirmation information.

Each of the control terminals 40-1 to 40-n comprises a protocol processor 41, narrow-band communication unit 42, input/output processor 43, output unit 44, input unit 45, identification information transmission processor 46, and confirmation information input processor 47.

The protocol processor 41 processes a communication protocol upon transmitting a video information request and request confirmation information from the narrow-band communication unit 42 to the narrow-band communication unit 11.

The narrow-band communication unit 42 has a processing function of communications made with the narrow-band communication unit 11 of the server 1 via the narrow-band communication path 20.

The input/output processor 43 has an input/output processing function of controlling the output unit 44 for displaying information for the user, and the input unit 45 for accepting information input by the user. Also, the processor 43 has a function of outputting information input by the user to the protocol processor 41 as a video information request and request confirmation information.

The output unit 44 has a function of displaying information to be displayed for the user in accordance with processing of the input/output processor 43.

The input unit 45 has a function of allowing the user to input a video information display request and request confirmation information.

The identification information transmission processor 46 outputs unique identification information assigned to the self control terminal to the protocol processor 41 upon transmitting a video information display request and request confirmation information.

The confirmation information input processor 47 outputs confirmation information (request confirmation information) input by the user via the input unit 45 to the protocol processor 41.

With the above arrangement, each of the control terminals 40-1 to 40-n transmits a video information display request used to read out desired video information from various kinds of video information stored in the video information storage 14 of the server 1 to the server 1 via the narrow-band communication path 20, and also request confirmation information to the server 1 via the narrow-band communication path 20.

The control terminals 40-1 to 40-n comprise portable telephones or PHS telephones compatible to a wireless telephone network, telephones compatible to a wired telephone network, and the like.

Each of the display terminals 50-1 to 50-n comprises a broad-band receiver 51, display processor 52, display 53, and confirmation information display processor 54.

The broad-band receiver 51 has a function of receiving video information and confirmation information sent from the broad-band transmitter 16 of the server 1 via the broad-band communication path 30.

The display processor 52 decodes video information received by the broad-band receiver 51 by a predetermined sequence according to the display function of the display 53, and outputs the decoded information to the display 53.

The confirmation information display processor 54 outputs confirmation information received by the broad-band receiver 51 to the display 53.

The display 53 has a function of displaying video information output from the display processor 52 and confirmation information output form the confirmation information display processor 54.

With the above arrangement, each of the display terminals 50-1 to 50-n displays video information and confirmation information transmitted from the server 1 via the broad-band communication path 30, thus allowing the user to browse them.

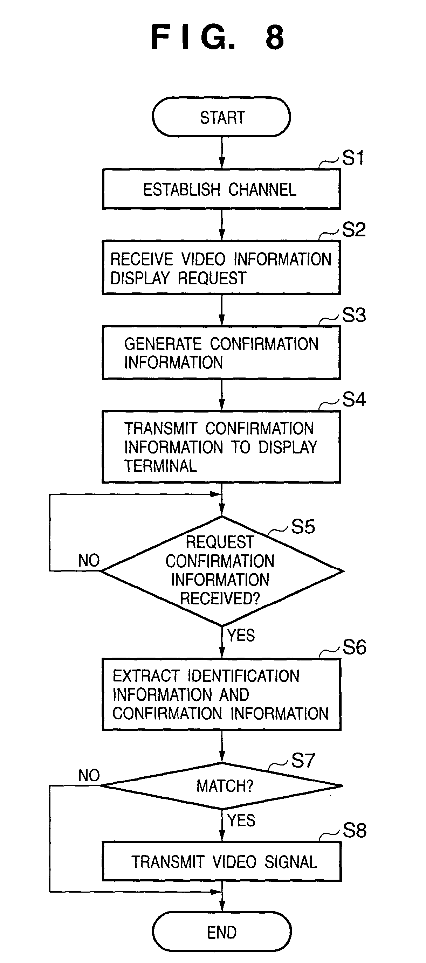

The operation of the multimedia on-demand system with the arrangement shown in Fig. 7 will be described below with reference to Fig. 8.

Fig. 8 is a flow chart showing the sequence of processes executed by the server 1.

Initially, the user of, e.g., the control terminal 40-1 inputs a control signal for instructing to establish a channel between the control terminal 40-1 and server 1 to the server 1 from the input unit 45. This channel establish control signal is output to the protocol processor 41 via the input/output processor 43, and is sent from the narrow-band communication unit 42 to the narrow-band communication unit 11 of the server 1 in accordance with a predetermined protocol. The narrow-band communication unit 11 sends the received channel establish control signal to the protocol processor 12, which processes the control signal, thus establishing a channel (S1).

After the channel between the control terminal 40-1 and server 1 is established, the user of the control terminal 40-1 inputs, from the input unit 45, video designation information for designating desired video information from various kinds of video information stored in the server 1, and address information for designating a display terminal that displays the designated video information. On the other hand, the identification information transmission processor 46 outputs the identification information of the self control terminal to the protocol processor 41. The protocol processor 41 transmits a video information display request, which is made up of the video designation information and address information input from the input unit 45, and the identification information output from the identification information transmission processor 46, to the server 1 using a predetermined communication protocol.

In the server 1, the protocol processor 12 receives the video information display request, and sends it to the identification information reception processor 18, confirmation information processor 19, and controller 13 (S2). The identification information reception processor 18 extracts the identification information from the video information display request, and outputs the identification information to the transmission confirmation processor 17. The controller 13 extracts the address information from the video information display request, and outputs the address information to the address setting unit 15.

The confirmation information processor 19 extracts the address information from the video information display request, detects the location of the designated display terminal as an output destination of the video information, and generates confirmation information (e.g., "location A, time B") by combining that location (e.g., location A) and the reception time (e.g., time B) of the video information display request (S3). The processor 19 then outputs this confirmation information to the address setting unit 15 via the controller 13.

The address setting unit 15 appends the address information already sent from the controller 13 to the confirmation information output from the confirmation information processor 19, and outputs the confirmation information to the broad-band transmitter 16. The broad-band transmitter 16 outputs the confirmation information appended with the address information onto the broad-band communication path 30. The broad-band communication path 30 computes a PVC value according to the address information appended to the confirmation information, and executes routing according to the PVC value, thus transmitting the confirmation information to the broad-band receiver 51 of the display terminal designated by the address information (S4).

The confirmation information sent to the broad-band receiver 51 is output to the confirmation information display processor 54, which executes a display process, thereby displaying the confirmation information on the display 53.

For example, assume that the display terminal designated by the address information is the display terminal 50-1, the confirmation information (e.g., "location A, time B") is displayed on the display 53 of the display terminal 50-1, and the user of the control terminal 40-1 can view the display 53 of the display terminal 50-1 at this location A. At this time, the user of the control terminal 40-1 who confirmed this confirmation information inputs a character string "location A, time B" of the confirmation information to the control terminal 40-1 via the input unit 45.

In the control terminal 40-1, the confirmation information input processor 47 outputs the confirmation information of this character string to the protocol processor 41 as request confirmation information. At the same time, the identification information transmission processor 46 outputs the identification information of the self control terminal to the protocol processor 41. The protocol processor 41 transmits request confirmation information which consists of the confirmation information of the input character string "location A, time B", and the identification information from the narrow-band communication unit 42 to the narrow-band communication unit 11 of the server 1 via the narrow-band communication path 20.

If the server 1 receives this request confirmation information (YES in S5), the protocol processor 12 sends this request confirmation information to the identification information reception processor 18 and confirmation information processor 19. The identification information reception processor 18 extracts the identification information from the request confirmation information, and outputs it to the transmission confirmation processor 17. The confirmation information processor 19 extracts the confirmation information from the request confirmation information, and outputs it to the transmission confirmation processor 17 (S6).

The transmission confirmation processor 17 compares the confirmation information (character string "location A, time B") transmitted to the display terminal on the basis of the received video information display request, and that contained in the request confirmation information sent from the control terminal as a result of displaying that confirmation information on the display terminal. Also, the processor 17 compares the identification information of the control terminal which transmitted the video information display request, and that of the control terminal when the request confirmation information was sent from the control terminal as a result of displaying the confirmation information transmitted to the display terminal based on the video information display request on the display terminal (S7).

If these two pairs of information match, the processor 17 instructs the controller 13 to transmit a video signal designated by the video designation information.

The controller 13 reads out designated video information from the video information storage 14 on the basis of the video designation information, and outputs it to the broad-band transmitter 16. The broad-band transmitter 16 appends address information, which is output from the address setting unit 15 and corresponds to the display terminal 50-1, to the readout video information, and outputs the video information onto the broad-band communication path 30 (S8).

The broad-band communication path 30 computes a PVC value in accordance with the address information appended to the video information, and executes routing according to the PVC value, thereby transmitting the video information to the broad-band receiver 51 of the designated display terminal 50-1.

The video information input to the broad-band receiver 51 is output to the display processor 52, which executes a decoding process, thus displaying the video information on the display 53.

If it is determined in step S7 that at least one of two pairs of confirmation information and identification information do not match, the process in step S8 is skipped.

As described above, according to this embodiment, before designated video information is read out from various kinds of video information stored in the video information storage 14 of the server 1 and is transmitted to the display terminal, confirmation information is output to the display terminal. The user of the control terminal, who watched this confirmation information displayed on the display terminal, returns the confirmation information from the control terminal, and the server 1 that received the returned confirmation information can confirm that the user of the control terminal has correctly designated the display terminal. After that, designated video information is read out, and is transmitted to the display terminal. Therefore, when the user of the control terminal designates a wrong display terminal, video information can be prevented from being transmitted to that wrong display terminal.

In this embodiment, a broad-band wired network such as ATM or the like, which allows multiplex transmission is used as the broad-band communication path 30, which serves as both communication means for video information, and that for transmitting confirmation information. Alternatively, communication means for video information, and that for transmitting confirmation information may be independently arranged. In this case, a CATV network can be used as communication means for video information, and a wireless or wired telephone network can be used as that for transmitting confirmation information.

In this embodiment, the video information and confirmation information are output to a single display of the display terminal. Alternatively, the video information and confirmation information may be output to independent displays. In the display terminal, a reception processor, display processor, and display for confirmation information may be provided as an apparatus in a housing independent from that for video information, and the display for video information, and that for confirmation information in the independent housing may be set at separate positions where the user can visually confirm them from an identical position.

### (Fifth Embodiment)

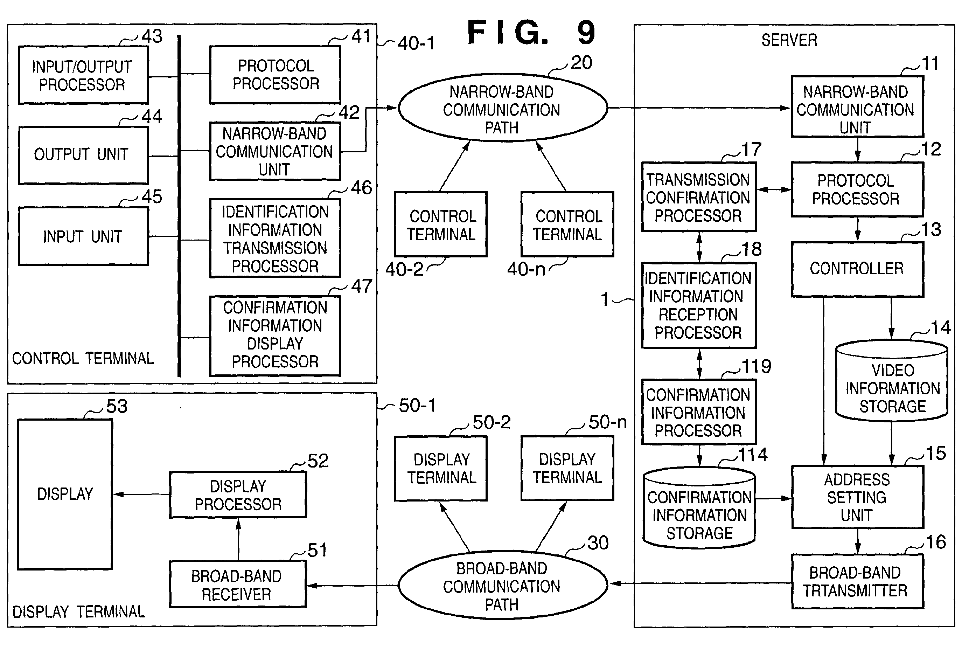

Fig. 9 is a block diagram showing the arrangement of a multimedia on-demand system according to the fifth embodiment of the present invention. Since the arrangement of the fifth embodiment is basically the same as that of the fourth embodiment, the same reference numerals denote the same parts, and a detailed description thereof will be omitted.

In the fifth embodiment, a reception number is assigned to video information to be displayed to store given information in correspondence with that number, and the reception number is used as confirmation information.

Referring to Fig. 9, reference numeral 114 denotes a confirmation information storage for storing text information "your reception number is ***. Please input reception number" or the like in correspondence with the reception number. Also, the storage 114 stores a reception number and identification information of a control terminal that has issued a display request of video information assigned that reception number in correspondence with each other.

Reference numeral 119 denotes a confirmation information processor, which reads out text information corresponding to the reception number assigned to video information designated by a video information display request with reference to the confirmation information storage 114 and outputs the readout information to an address setting unit 15 upon receiving the display request. Also, the processor 119 stores the identification number of the control terminal that has transmitted the video information display request in the confirmation information storage 114 in correspondence with the reception number.

In display terminals 50-1 to 50-n, the confirmation information display processor 54 in the fourth embodiment is omitted.

In the fifth embodiment as well, the video information display request sent from each of the control terminals 40-1 to 40-n to the server 1 contains designation information of video information that the user of the control terminal who submitted the video information display request wants to display, address information for designating a display terminal which is to display the video information, and identification information of the control terminal that transmitted the video information display request.

In the server 1 that has received the video information display request, the confirmation information processor 119 reads out text information (e.g., "your reception number is ***. Please input reception number") corresponding to the reception number assigned to video information with reference to the confirmation information storage 114, and outputs the readout information to the address setting unit 15. Also, the processor 119 stores identification information extracted from the video information display request by an identification information reception processor 18 in the confirmation information storage 114 in correspondence with the reception number assigned to the video information.

The address setting unit 15 appends address information for designating a display terminal which is to display the text information to that text information read out from the confirmation information storage 114, and the text information is transmitted from a broad-band transmitter 16 to a broad-band receiver 51 of the display terminal corresponding to the address information via a broad-band communication path 30. The text information undergoes a display process by a display processor 52, and is then displayed on a display 53.

Note that the broad-band transmitter 16 outputs this text information onto the broad-band communication path 30 in the form of a video signal. In this way, in the fifth embodiment, neither a dedicated communication means for transmitting confirmation information (text information) nor a dedicated display means in a display terminal for displaying confirmation information (text information) are required in addition to the communication means for transmitting video information.

For example, assume that the display terminal designated by the address information is the display terminal 50-1, confirmation information, i.e., text information (e.g., "your reception number is ***. Please input reception number") is displayed on the display 53 of the display terminal 50-1, and the user of the control terminal 40-1 can view the display 53 of the display terminal 50-1. At this time, the user of the control terminal 40-1 who confirmed this confirmation information inputs the reception number *** of the confirmation information to the control terminal 40-1 via an input unit 45.

After that, in the control terminal 40-1, a confirmation information input processor 47 outputs this reception number to a protocol processor 41 as request confirmation information. At the same time, an identification information transmission processor 46 outputs the identification information of the self control terminal to the protocol processor 41. The protocol processor 41 transmits request confirmation information, which is made up of the input reception number and identification information, using a predetermined communication protocol from a narrow-band communication unit 42 to the narrow-band communication unit 11 of the server 1 via the narrow-band communication path 20.

When the server 1 receives this request confirmation information, a protocol processor 12 sends this request confirmation information to the identification information reception processor 18 and confirmation information processor 119. The identification information reception processor 18 extracts the identification information from the request confirmation information and outputs it to a transmission confirmation processor 17. The confirmation information processor 119 extracts the reception number from the request confirmation information and outputs it to the transmission confirmation processor 17.

The transmission confirmation processor 17 compares the reception number "***" in the text information transmitted to the display terminal on the basis of the received video information display request, and that contained in the request confirmation information sent from the control terminal as a result of displaying that text information on the display terminal. Also, the processor 17 compares the identification information of the control terminal which transmitted the video information display request, and that of the control terminal when the request confirmation information was sent from the control terminal as a result of displaying the confirmation information transmitted to the display terminal based on the video information display request on the display terminal.

If these two pairs of information match, the processor 17 instructs the controller 13 to transmit a video signal designated by the video designation information.

The controller 13 reads out designated video information from the video information storage 14 on the basis of the video designation information, and outputs it to the broad-band transmitter 16. The broad-band transmitter 16 appends address information, which is output from the address setting unit 15 and corresponds to the display terminal 50-1, to the readout video information, and outputs the video information onto the broad-band communication path 30.

In this manner, in the fifth embodiment, since the text information is output onto the broad-band communication path 30 in the form of a video signal, neither a dedicated communication means for transmitting confirmation information (text information) nor a dedicated display means in a display terminal for displaying confirmation information (text information) are required in addition to the communication means for transmitting video information.

### (Sixth Embodiment)

The sixth embodiment will be described below.

Since the arrangement of the sixth embodiment is basically the same as that of the fourth embodiment, the arrangement of the fourth embodiment will be quoted in the description of the sixth embodiment, and only different arrangement portions will be explained.

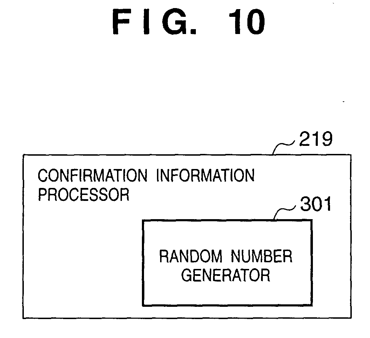

Fig. 10 is a block diagram showing the arrangement of a confirmation information processor of a server in the sixth embodiment.

Referring to Fig. 10, reference numeral 219 denotes a confirmation information processor which corresponds to the confirmation information processor 19 of the fourth embodiment, and includes a random number generator 301.

The confirmation information processor 219 generates confirmation information similar to that in the fourth embodiment. In the fourth embodiment, confirmation information uses information that pertains to the location and time. However, in the sixth embodiment, a random number generated by the random number generator 301 is used as confirmation information. The operation of the sixth embodiment is substantially the same as that of the fourth embodiment, except for the above operation.

Compared to the fourth embodiment which uses information that pertains to the location and time as confirmation information, in the sixth embodiment which uses a random number as confirmation information, it is impossible to estimate confirmation information. Therefore, it is difficult for the user of the control terminal, who is not at a position where he or she can visually observe the display terminal, to estimate confirmation information and to send request confirmation information to the server. Therefore, the server can be prevented from wastefully transmitting video information to a display terminal which is not located within the visible range of the user.

### (Another Embodiment)

Note that the objects of the present invention are also achieved by supplying a storage medium, which stores a program code of a software program that can implement the functions of the above-mentioned embodiments to a system or apparatus, and reading out and executing the program code stored in the storage medium by a computer (or a CPU or MPU) of the system or apparatus.

In this case, the program code itself read out from the storage medium implements the functions of the above-mentioned embodiments, and the storage medium which stores the program code constitutes the present invention.

As the storage medium for supplying the program code, for example, a floppy disk, hard disk, optical disk, magnetooptical disk, CD-ROM, CD-R, magnetic tape, nonvolatile memory card, ROM, and the like may be used.

The scope of the present invention includes a case wherein the functions of the above-mentioned embodiments are implemented not only by executing the readout program code by the computer but also by some or all of actual processing operations executed by an OS (operating system) running on the computer on the basis of an instruction of the program code.

Furthermore, the scope of the present invention includes a case wherein the functions of the above-mentioned embodiments are implemented by some or all of actual processing operations executed by a CPU or the like arranged in a function extension board or a function extension unit, which is inserted in or connected to the computer, after the program code read out from the storage medium is written in a memory of the extension board or unit.

As described in detail above, according to the embodiments of the present invention, since a control terminal for transmitting control information, and a display terminal for receiving and displaying video information are separated, and a network for transmitting control information and a network for transmitting video information are separated, the arrangement of each terminal can be simplified, thus achieving a cost reduction. Also, MPEG2-class, high-resolution video information can be processed.

A server which received a display request of video information from the control terminal transmits confirmation information to a designated display terminal which is to display video information, and when the user who watched the confirmation information transmits the same information as the confirmation information from the control terminal from which he or she transmitted the video information display required, the video information designated by the display request is transmitted to the designated display terminal. In this way, the video information can be displayed only on the display terminal correctly designated by the user.

Furthermore, the confirmation information is a reception identification number assigned to video information designated by the video designation information, and the reception identification number has a format of a video information. In this fashion, neither a dedicated communication means for transmitting confirmation information (reception identification number) nor a dedicated display means in a display terminal for displaying confirmation information are required in addition to the communication means for transmitting video information.

Moreover, the confirmation information is a random number generated upon receiving the video information display request. In this manner, the user of the control terminal, who is not at a position where he or she can visually observe the display terminal, cannot estimate confirmation information and cannot transmit request confirmation information to the server. Hence, the server can be prevented from wastefully transmitting video information to a display terminal which is not located within the visible range of the user.

The present invention is not limited to the above embodiments and various changes and modifications can be made within the spirit and scope of the present invention. Therefore, to apprise the public of the scope of the present invention, the following claims are made.

## Claims

1. A communication system comprising:
a plurality of first terminals connected to a first transmission path for transmitting first information;
a plurality of second terminals connected to a second transmission path for transmitting second information different from the first information; and
a server connected to said first and second transmission paths,
wherein the second information is transmitted from said server to one of said plurality of second terminals, and the first information is transmitted from one of said plurality of first terminals to said server to control transmission of the second information from said server.

2. The system according to claim 1, wherein the second information contains video information.

3. The system according to claim 1, wherein said plurality of second terminals have a function of outputting the second information.

4. The system according to claim 1, wherein said server comprises transmission means for transmitting the second information onto said second transmission path and does not comprise any reception means for receiving the second information from said second transmission path, each of said plurality of second terminals comprises reception means for receiving the second information from said second transmission path and does not comprise any transmission means for transmitting the second information onto said second transmission path.

5. The system according to claim 1, wherein the first information contains specifying information for specifying one of said plurality of second terminals.

6. The system according to claim 1, further comprising a third transmission path for transmitting third information between said plurality of first terminals and said plurality of second terminals.

7. The system according to claim 6, wherein the third information is setup information, which is transmitted from the first terminal to the second terminal before the first information is transmitted, so as to initialize the second terminal.

8. The system according to claim 6, wherein the third information is information, which is transmitted from the second terminal to the first terminal and indicates an initialization result of the second terminal.

9. The system according to claim 6, wherein the third information is notifying information, which is transmitted from the second terminal to the first terminal and notifies start of output of the second information in the second terminal.

10. The system according to claim 1, wherein the first information contains first designation information for designating one of a plurality of pieces of information held in said server, and second designation information for designating one of said plurality of second terminals, and
the second information is information which is read out from said server on the basis of the first designation information, and is transmitted from said server to the second terminal designated by the second designation information.

11. An information transmission method applied to a communication system which comprises a plurality of first terminals connected to a first transmission path for transmitting first information, a plurality of second terminals connected to a second transmission path for transmitting second information different from the first information, and a server connected to said first and second transmission paths, comprising:
the first transmission step of transmitting the first information from one of said plurality of first terminals to said server; and
the second transmission step of transmitting the second information from said server to one of said plurality of second terminals on the basis of the first information transmitted in the first transmission step.

12. The method according to claim 11, wherein the second information contains video information.

13. The method according to claim 11, wherein said plurality of second terminals have a function of outputting the second information.

14. The method according to claim 11, wherein the first information contains specifying information for specifying one of said plurality of second terminals.

15. The method according to claim 11, wherein said communication system further comprises a third transmission path between the first and second terminals, and
said method further comprises the initialization step of initializing the second terminal by transmitting third information from the first terminal to the second terminal via said third transmission path before the first information is transmitted.

16. The method according to claim 15, further comprising the result transmission step of transmitting information indicating an initialization result of the second terminal from the second terminal which received the third information to the first terminal which transmitted the third information via said third transmission path.

17. The method according to claim 11, wherein said communication system further comprises a third transmission path between the first and second terminals, and
said method further comprises the notifying information transmission step of transmitting notifying information, which notifies start of output of the second information in the second terminal, from the second terminal to the first terminal via said third transmission path.

18. The method according to claim 11, wherein the first information contains first designation information for designating one of a plurality of pieces of information held in said server, and second designation information for designating one of said plurality of second terminals, and
the second information is information which is read out from said server on the basis of the first designation information, and is transmitted from said server to the second terminal designated by the second designation information.

19. A computer readable storage medium, which stores as a program an information transmission method applied to a communication system which comprises a plurality of first terminals connected to a first transmission path for transmitting first information, a plurality of second terminals connected to a second transmission path for transmitting second information different from the first information, and a server connected to said first and second transmission paths,
said information transmission method comprising:
the first transmission step of transmitting the first information from one of said plurality of first terminals to said server; and
the second transmission step of transmitting the second information from said server to one of said plurality of second terminals on the basis of the first information transmitted in the first transmission step.

20. A video server which is connected to a plurality of first terminals via a first transmission path, and to a plurality of second terminals via a second transmission path, comprising:
display request reception means for receiving a video information display request which is transmitted from one of said plurality of first terminals, and consists of video designation information for designating video information to be displayed, and display device designation information for designating the second terminal which is to display the video information;
confirmation information transmission means for transmitting first confirmation information, which is generated based on the video information display request, to the second terminal designated by the display device designation information of the video information display request;
request confirmation information reception means for receiving request confirmation information which is transmitted from one of said plurality of first terminals, and consists of second confirmation information;
first comparison means for comparing identification information of the first terminal which transmitted the request confirmation information, and identification information of the first terminal which transmitted the video information display request;
second comparison means for comparing the second confirmation information contained in the request confirmation information received by said request confirmation information reception means, and the first confirmation information transmitted by said confirmation information transmission means; and
video information transmission means for transmitting video information designated by the video designation information of the video information display request to the second terminal designated by the display device designation information in accordance with comparison results of said first and second comparison means.

21. The server according to claim 20, wherein the request confirmation information is generated on the basis of second confirmation information which is the same as the first confirmation information and is input to the first terminal by a user of the first terminal, who can recognize the first confirmation information as a result of transmitting the first confirmation information to the second terminal designated by the display device designation information of the video information display request.

22. The server according to claim 20, wherein the first confirmation information is generated on the basis of a position where the second terminal designated by the display device designation information is located.

23. The server according to claim 20, wherein the first confirmation information is a reception identification code assigned to video information designated by the video designation information.

24. The server according to claim 23, wherein the reception identification code has a format of a video signal, and
a communication path via which said confirmation information transmission means transmits the reception identification code to the second terminal is the same as a communication path via which said video information transmission means transmits the video information to the second terminal.

25. The server according to claim 20, wherein the first confirmation information is a random number generated upon receiving the video information display request.

26. A terminal connected to a video server which transmits, upon receiving a video information display request containing video designation information for designating video information to be displayed, and display device designation information for designating a display device which is to display the video information, first confirmation information generated based on the video information display request to the display device designated by the display device designation information of the video information display request before the video information designated by the video designation information of the video information display request is transmitted to the display device designated by the display device designation information, comprising:
generation means for, when a user, who can recognize the first confirmation information as a result of transmitting the first confirmation information to the display device designated by the display device designation information of the video information request, inputs second confirmation information which is the same as the first confirmation information, generating request confirmation information on the basis of the second confirmation information; and
transmission means for transmitting the request confirmation information generated by said generation means to said video server.

27. The terminal according to claim 26, further comprising reception means for receiving the second confirmation information when the user inputs the second confirmation information.

28. A display device connected to a video server which transmits, upon receiving a video information display request containing video designation information for designating video information to be displayed, and display device designation information for designating a display device which is to display the video information, first confirmation information generated based on the video information display request to the display device designated by the display device designation information of the video information display request, and transmits, when second confirmation information received later is the same as the first confirmation information and a terminal which transmitted the video information display request is the same as a terminal which transmitted the second confirmation information, video information designated by the video designation information of the video information display request to the display device designated by the display device designation information, comprising:
first display means for displaying the video information; and
second display means for displaying the first confirmation information.

29. The device according to claim 28, wherein said first and second display means are constructed by single display means.

30. The device according to claim 28, further comprising single reception means for receiving the video information and the first confirmation information.

31. A designation confirmation method applied to a video server which is connected to a plurality of first terminals via a first transmission path, and to a plurality of second terminals via a second transmission path, comprising:
the display request reception step of receiving a video information display request which is transmitted from one of said plurality of first terminals, and consists of video designation information for designating video information to be displayed, and display device designation information for designating the second terminal which is to display the video information;
the confirmation information transmission step of transmitting first confirmation information, which is generated based on the video information display request, to the second terminal designated by the display device designation information of the video information display request;
the request confirmation information reception step of receiving request confirmation information which is transmitted from one of said plurality of first terminals, and consists of second confirmation information;
the first comparison step of comparing identification information of the first terminal which transmitted the request confirmation information, and identification information of the first terminal which transmitted the video information display request;
the second comparison step of comparing the second confirmation information contained in the request confirmation information received in the request confirmation information reception step, and the first confirmation information transmitted in the confirmation information transmission step; and
the video information transmission step of transmitting video information designated by the video designation information of the video information display request to the second terminal designated by the display device designation information in accordance with comparison results in the first and second comparison steps.

32. The method according to claim 31, wherein the request confirmation information is generated on the basis of second confirmation information which is the same as the first confirmation information and is input to the first terminal by a user of the first terminal, who can recognize the first confirmation information as a result of transmitting the first confirmation information to the second terminal designated by the display device designation information of the video information display request.

33. The method according to claim 31, wherein the first confirmation information is generated on the basis of a position where the second terminal designated by the display device designation information is located.

34. The method according to claim 31, wherein the first confirmation information is a reception identification code assigned to video information designated by the video designation information.

35. The method according to claim 31, wherein the reception identification code has a format of a video signal, and
a communication path via which the reception identification code is transmitted to the second terminal in the confirmation information transmission step is the same as a communication path via which transmits the video information is transmitted to the second terminal in the video information transmission step.

36. The method according to claim 31, wherein the first confirmation information is a random number generated upon receiving the video information display request.

37. A computer readable storage medium that stores as a program a designation confirmation method applied to a video server which is connected to a plurality of first terminals via a first transmission path, and to a plurality of second terminals via a second transmission path,
said designation confirmation method comprising:
the display request reception step of receiving a video information display request which is transmitted from one of said plurality of first terminals, and consists of video designation information for designating video information to be displayed, and display device designation information for designating the second terminal which is to display the video information;
the confirmation information transmission step of transmitting first confirmation information, which is generated based on the video information display request, to the second terminal designated by the display device designation information of the video information display request;
the request confirmation information reception step of receiving request confirmation information which is transmitted from one of said plurality of first terminals, and consists of second confirmation information;
the first comparison step of comparing identification information of the first terminal which transmitted the request confirmation information, and identification information of the first terminal which transmitted the video information display request;
the second comparison step of comparing the second confirmation information contained in the request confirmation information received in the request confirmation information reception step, and the first confirmation information transmitted in the confirmation information transmission step; and
the video information transmission step of transmitting video information designated by the video designation information of the video information display request to the second terminal designated by the display device designation information in accordance with comparison results in the first and second comparison steps.
